# EUROPÄISCHE PATENTSCHRIFT

(11) **EP 2 859 032 B1**
(45) Veröffentlichungstag und Bekanntmachung des Hinweises auf die Patenterteilung: **29.08.2018**
(21) Anmeldenummer: 13732846.4
(22) Anmeldetag: 06.06.2013
(51) Int. Cl.: C08G 65/40

(54) **VERFAHREN ZUR HERSTELLUNG EINES POLYETHERETHERKETONS**
METHOD FOR PRODUCING A POLYETHER ETHER KETONE
PROCÉDÉ DE PRODUCTION D'UN POLYÉTHERÉTHERCÉTONE

(30) Priorität: 06.06.2012 DE 102012209550
(43) Veröffentlichungstag der Anmeldung: 15.04.2015
(73) Patentinhaber: Perpetuum-Ebner GmbH & Co. Kg, 78112 St. Georgen (DE)
(72) Erfinder: BECKMANN, Jens, 28203 Bremen (DE)
(74) Vertreter: Maikowski & Ninnemann Patentanwälte Partnerschaft mbB
(86) Internationale Anmeldenummer: PCT/EP2013/061700
(87) Internationale Veröffentlichungsnummer: WO 2013/182642

(56) Entgegenhaltungen:
- EP-A2- 0 148 633
- US-A- 4 882 397

## Beschreibung

Die Erfindung betrifft ein Verfahren zur Herstellung eines Polyetheretherketons gemäß dem Oberbegriff des Anspruchs 1.

Polyetheretherketon (PEEK) zählt zur Klasse der Polyaryletherketone (PAEK). Diese Hochleistungskunststoffe werden in den Bereichen der Automobile und Schienenfahrzeuge, Luft- und Raumfahrt, Maschinen- und Apparatebau, Elektrotechnik und Kabel, Elektronik und Halbleiter, Medizintechnik sowie die lebensmittelverarbeitenden Industrie in weiter wachsender Menge eingesetzt.

PEEK weist die nachfolgend dargestellte allgemeine Strukturformel (III) auf:

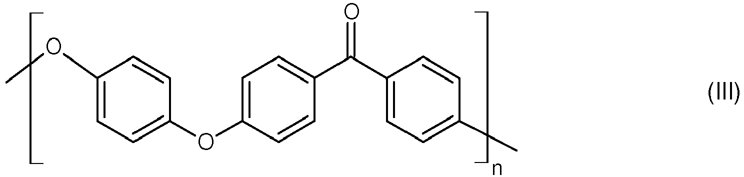

Gemäß einem aus dem Stand der Technik bekannten Verfahren erfolgt die Herstellung von PEEK durch eine Williamson-Ether-Synthese ausgehend von 4,4'-Difluorbenzophenon und Hydroxychinon, welches zunächst mit Natriumcarbonat deprotoniert wird. Dabei erfolgt die Polykondensation typischerweise bei 300 °C im hochsiedenden Lösungsmittel Diphenylsulfon (Ph₂SO₂). Dieses Reaktionsschema ist nachfolgend wiedergegeben:

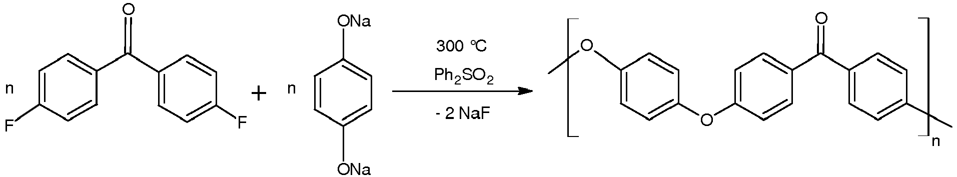

Die hohe Reaktionstemperatur erklärt sich aus der geringen Löslichkeit von PEEK in gewöhnlichen Lösungsmitteln bei Raumtemperatur. Die hohe Reaktionstemperatur birgt jedoch zahlreiche Nachteile:
- Die Polymerausbeute und das Molekulargewicht sind aufgrund des Entropieeffekts geringer als bei tieferen Temperaturen.
- Bei hohen Temperaturen treten unkontrollierbare Nebenreaktionen auf. Ein Problem ist dabei die leichte Oxidierbarkeit von Hydroxychinon zu Chinon. Beide Verbindungen bilden einen farbigen Charge-Transfer-Komplex, der sich störend auf die Farbe des sonst weißen PEEKs auswirkt.
- Die Verwendung des teuren Fluor-haltigen Ausgangsprodukts 4,4'-Difluorbenzophenon sowie des ebenfalls teuren Lösungsmittels Diphenylsulfon ist zwingend erforderlich.

Der vorliegenden Erfindung liegt die Aufgabe zugrunde, ein Verfahrend zur Herstellung eines Polyetheretherketons anzugeben, das die vorgenannten Nachteile der aus dem Stand der Technik bekannten Verfahren überwindet.

Diese Aufgabe wird durch ein Verfahren mit den Merkmalen des Anspruchs 1 gelöst. Dieses Verfahren zeichnet sich durch die folgenden Schritte aus:

Zunächst wird ein mindestens zweifach substituiertes Benzophenon der allgemeinen Formel (I) mit einem Benzolderivat der allgemeinen Formel (II) umgesetzt.

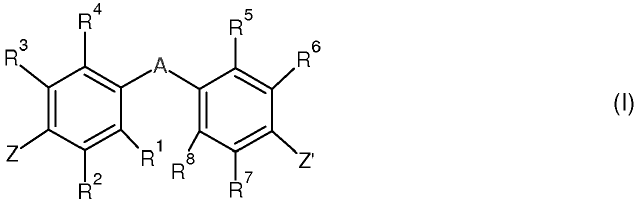

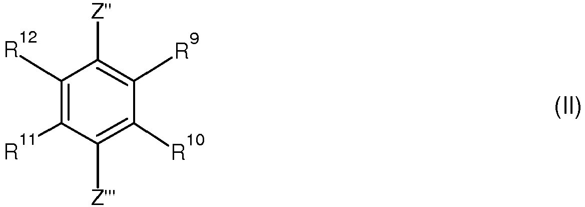

In diesen Strukturformeln bedeuten:
- A: ein mit einer Schutzgruppe versehenes Kohlenstoffatom,
- R¹, R², R³, R⁴, R⁵, R⁶, R⁷, R⁸, R⁹, R¹⁰, R¹¹, R¹²: jeweils unabhängig voneinander H, D, OH, X, substituiertes oder nicht substituiertes C₁-C₅-Alkyl oder substituiertes oder nicht substituiertes C₆-C₁₀-Aryl,
- X: F, Cl, Br oder I,
- Z, Z', Z", Z"': jeweils unabhängig voneinander OH, OMe, Me(OH)ₘMeR¹³ₘ oder Me,
- m: 1, 2, 3 oder 4,
- R¹³: Metall, Alkalimetall oder Erdalkalimetall und
- Me: Metall, Alkalimetall oder Erdalkalimetall.

Anschließend wird das im vorherigen Schritt gebildete Produkt entschützt, um ein Polyetheretherketon der allgemeinen Formel (III) zu erhalten:

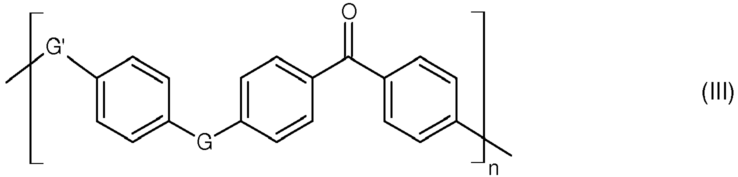

In dieser Formel bedeuten:
- G, G': jeweils unabhängig voneinander O oder C und
- n: eine ganze Zahl, die größer als 10 ist.

Das besondere an diesem Verfahren besteht darin, dass kein 4,4'-Difluorobenzophenon eingesetzt wird, sondern ein mit einer Schutzgruppe versehenes 4,4'-substituiertes Benzophenon, das optional weitere Substituenten tragen kann.

Dieses Verfahren eignet sich sowohl zur Herstellung klassischer PEEKs, bei denen die einzelnen Benzophenon- und Phenoleinheiten mittels Etherbrücken verknüpft sind als auch zur Herstellung modifizierter PEEKs, bei denen zumindest ein Teil der Benzophenon- und Phenoleinheiten über Kohlenstoffatome miteinander verbunden sind. Die Anzahl der in das Molekül eingeführten Kohlenstoffbrücken kann dabei nach Belieben variiert werden.

Besonders bevorzugt ist jedoch die Durchführung des Verfahrens in solcher Weise, dass den Resten G und G' jeweils die Bedeutung O zukommt, das heißt, dass klassische Etherbrücken vorliegen.

PEEK ist aufgrund der hohen Kristallinität und der damit verbundenen hohen Gitterenergie bei Raumtemperatur praktisch unlöslich in allen gängigen organischen Lösungsmitteln. Es weist eine Glasübergangstemperatur (T_{g}) von 144 °C und einen Schmelzpunkt (Tₘ) von 334 °C auf. Durch das Einführen einer Schutzgruppe zeigt das PEEK jedoch vollkommen andere physikalische Eigenschaften Es ist nun amorph, weist demzufolge eine geringere Gitterenergie auf und ist nun in vielen organischen Lösungsmitteln bei Raumtemperatur löslich.

Dadurch lässt sich die Reaktionstemperatur während des Herstellungsverfahrens signifikant absenken, da die Schutzgruppe nun auch bei niedrigeren Temperaturen eine Löslichkeit des gebildeten Produkt in gängigen organischen Lösungsmitteln ermöglicht.

In einer bevorzugten Variante wird das Verfahren daher bei einer Temperatur von 250 °C oder weniger, insbesondere 200 °C oder weniger, insbesondere 150 °C oder weniger, insbesondere 140 °C oder weniger, insbesondere 130 °C oder weniger, insbesondere 120 °C oder weniger, insbesondere 110 °C oder weniger, insbesondere 100 °C oder weniger, insbesondere 90 °C oder weniger, insbesondere 80 °C oder weniger, insbesondere 70 °C oder weniger, insbesondere 60 °C oder weniger, insbesondere 50 °C oder weniger, insbesondere 40 °C oder weniger und ganz besonders 30 °C oder weniger durchgeführt.

Geeignete Lösungsmittel sind beispielsweise Trichlormethan (Chloroform), Dichlormethan, oder Tetrahydrofuran (THF).

Die niedrigere Reaktions- bzw. Polymerisationstemperatur hat zur Folge, dass weniger niedermolekulare Produkte und Nebenprodukte gebildet werden. Darüber hinaus ist es nicht mehr erforderlich, 4,4'-Difluorobenzophenon als Edukt einzusetzen. Vielmehr kann auch ein mit einer Schutzgruppe versehenes 4,4'-zweifach substituiertes Benzophenon entsprechend der obigen Definition verwendet werden, das deutlich kostengünstiger erhältlich ist.

Das Entschützen des gebildeten PEEKs kann vorzugsweise durch eine Umsetzung in 2-lodo-2-methylpropan oder tert-Butyliodid erfolgen. Ein geeignetes Lösungsmittel für diese Reaktion ist Chloroform. Ein Zusatz von Dimethylsulfoxid (DMSO) ist bevorzugt.

Vorzugsweise wird die Schutzgruppe vor Schritt a) durch Umsetzen eines 4,4'-Dihalogenobenzophenons mit einem Diol oder einem Dithiol, insbesondere durch Umsetzen mit 1,2-Ethandiol (Glykol) oder 1,2-Ethandithiol (Thioglykol) in das 4,4'-Dihalogenobenzophenons der allgemeinen Formel (I) eingeführt. Alkylsubstituierte Derivate der vorgenannten Substanzen bzw. anderer Diole oder Dithiole sind ebenfalls zum Einführen einer Schutzgruppe geeignet.

Wird 1,2-Ethandiol als Reaktionspartner zum Einführen der Schutzgruppe eingesetzt, bildet sich gemäß dem nachfolgenden Reaktionsschema ein thioacetalisiertes PEEK:

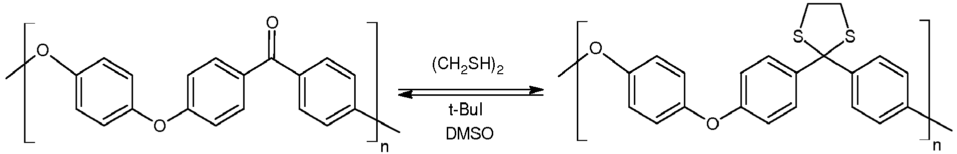

Diese Reaktion läuft am besten unter stark sauren Bedingungen ab, unter denen die zu schützende Carbonylgruppe protoniert wird. Diese stark sauren Bedingungen können beispielsweise durch Trifluoressigsäure (TFA) eingestellt werden.

Die Thioacetalisierung ist reversibel und kann beispielsweise durch Umsetzung des geschützten Produkts mit tert-Butyliodid (t-Bul) oder 2-lodo-2-methylpropan wieder entfernt werden. Ein geeignetes Lösungsmittel für diese Entschützungsreaktion ist Dimethylsulfoxid (DMSO).

Das thioacetalisierte PEEK weist eine Glasübergangstemperatur von 157 °C auf und ist unter anderem in Trichlormethan und Tetrahydrofuran löslich.

Neben einer Thioacetalisierung hat sich auch eine Acetalisierung als besonders geeignete Modifikation des PEEK zur Einführung einer Schutzgruppe herausgestellt. Vorzugsweise ist die Schutzgruppe daher eine Verbindung der allgemeinen Formel (IV), 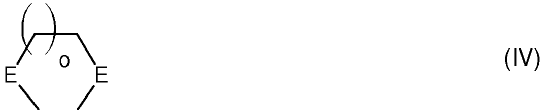 wobei E ein Sauerstoff- oder ein Schwefelatom bedeutet, o 1, 2, 3, 4, 5, 6, 7, 8, 9 oder 10 bedeutet und wobei das zu schützende Kohlenstoffatom mittels der beiden in der Formel (IV) dargestellten Bindungen an die Atome des Typs E gebunden ist, wie dies in der nachfolgenden allgemeinen Formel (V) beispielhaft dargestellt ist:

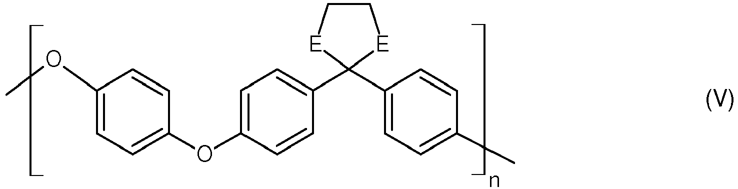

Es ist auch möglich, dass sowohl ein Sauerstoff- als auch ein Schwefelatom in der Schutzgruppe enthalten ist, der Gruppe "E" also in einem Molekül zwei unterschiedliche Bedeutungen zukommen. Ferner kann die Schutzgruppe auch aus alkylsubstituierten Derivaten der Verbindungen der allgemeinen Formel (IV) bestehen.

Vorzugsweise kommt dem Rest Me die Bedeutung von Li, Na, K, Ca, Bi, Sn oder B zu. Arylbismuthverbindungen oder Arylzinnverbindungen sind dabei besonders bevorzugt. Ebenfalls bevorzugt ist es, wenn Me B bedeutet, es sich beim Benzolderivat also um eine Arylborverbindung handelt.

Vorzugsweise wird als mindestens zweifach substituiertes Benzophenon eine Verbindung mit folgender Strukturformel (VI) eingesetzt:

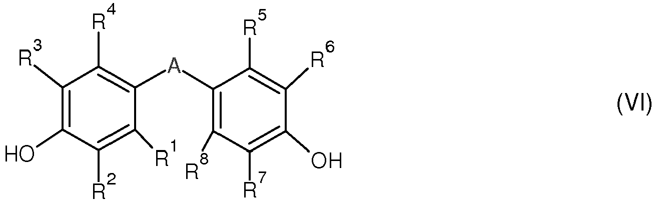

Das heißt, vorzugsweise wird ein 4,4'-Dihydroxybenzophenon als Edukt eingesetzt. Auf diese Weise lässt sich das beschriebene Verfahren besonders einfach und kostengünstig durchführen.

In einer weiteren bevorzugten Variante wird als Benzolderivat eine Phenylborsäure mit folgender Strukturformel (VII) eingesetzt:

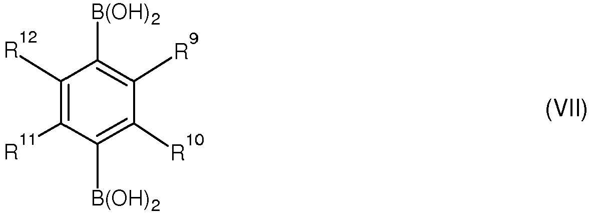

So hat sich gezeigt, dass mit einer derartigen Phenylborsäure ein 4,4'-substituiertes Benzophenon besonders gut und in vorteilhafter Ausbeute umgesetzt werden kann.

Besonders bevorzugt ist der Einsatz eines 4,4'-Dihydroxybenzophenons gemäß Formel (VI) und einer Phenylborsäure gemäß Formel (VII).

In einer Variante erfolgt das Umsetzen in Anwesenheit eines Katalysators, um die Reaktionszeiten zu verkürzen.

Dieser Katalysator ist vorzugsweise ausgewählt aus Verbindungen, die Nickel, Kupfer, Zink, Palladium, Silber, Cadmium, Platin und/oder Gold enthalten Weitere geeignete Katalysatoren sind die vorgenannten Metallen selbst.

Als besonders vorteilhaft haben sich dabei Kupferoxid (Cu₂O), Kupfer(II)-triflat, Kupfernitrat (Cu(NO₃)₂), Kupfer(II)-acetat und/oder Kupfer(II)-acetylacetonat ((Cu(acac)₂) als Katalysatoren oder Bestandteile von Katalysatoren herausgestellt.

Ferner hat sich gezeigt, dass vorzugsweise Alkalimetallsalze und/oder Erdalkalimetallsalze als (weitere) Katalysatoren eingesetzt werden. Insbesondere der Einsatz von Natriumcarbonat hat sich als vorteilhaft herausgestellt.

In einer Variante wird das in Schritt gebildete Produkt zunächst gereinigt, bevor eine Entschützung gemäß Schritt b) erfolgt. Alternativ kann auch zunächst eine Entschützung und dann eine Aufreinigung des Produkts erfolgen.

Weitere Vorteile und Einzelheiten der vorliegenden Erfindung sollen anhand von Ausführungsbeispielen näher erläutert werden.

### Beispiel 1: Synthese von 4,4'-(1,3-Dithiolan-2,2-diyl)diphenol (2)

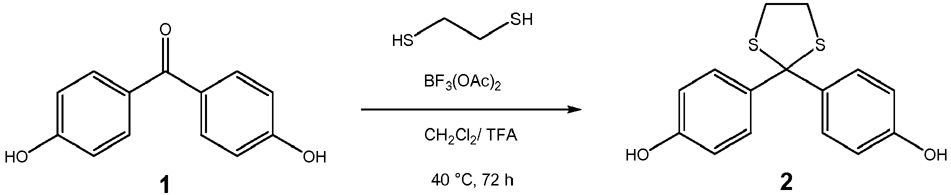

Zu 4,4'-Dihydroxybenzophenon (**1**) (7 mmol, 1,5 g) in Dichlormethan (20 ml), unter inerten Bedingungen, wurde Ethandithiol (14 mmol, 1,3 g) getropft. Nachdem das Gemisch auf 0 °C abgekühlt wurde, wurden Trifluorboretherat (9,3 mmol, 1,3 g) und 2 ml Trifluoressigsäure zugetropft. Die orangefarbene Lösung wurde für 72 Stunden bei 40 °C gerührt. Das Reaktionsgemisch wurde mit 5%iger-Natriumhydrogencarbonat-Lösung und Wasser gewaschen. Nach dem Trocknen der organischen Phase mit Magnesiumsulfat und dem Entfernen des Lösungsmittels im Vakuum erhielt man das Rohprodukt 4,4'-(1,3-Dithiolan-2,2-diyl)diphenol (**2**).
Ausbeute: 98 %
¹H-NMR (200 MHz, Aceton-*d₆*) δ = 3.43 (s, 4H, C*H*₂), 6.75 (m, 4H, *H*-Ar), 7.40
(m, 4H, *H*-Ar), 8.40 (s, 2 H, O*H*) ppm
¹³C-NMR (90 MHz, Aceton-*d₆*) δ = 39.9, 77.1, 114.7, 130.0, 135.9, 156.8 ppm
MS (EI, 70 eV) m/z = 290 g/mol
Schmelzpunkt: 191 - 195 °C

### Beispiel 2: Synthese von Poly(ether-dithioacetal) (4)

Das in Beispiel 1 gewonnene Produkt wurde anschließend verwendet, um ein PEEK herzustellen. Dies ist im nachfolgenden Reaktionsschema wiedergegeben:

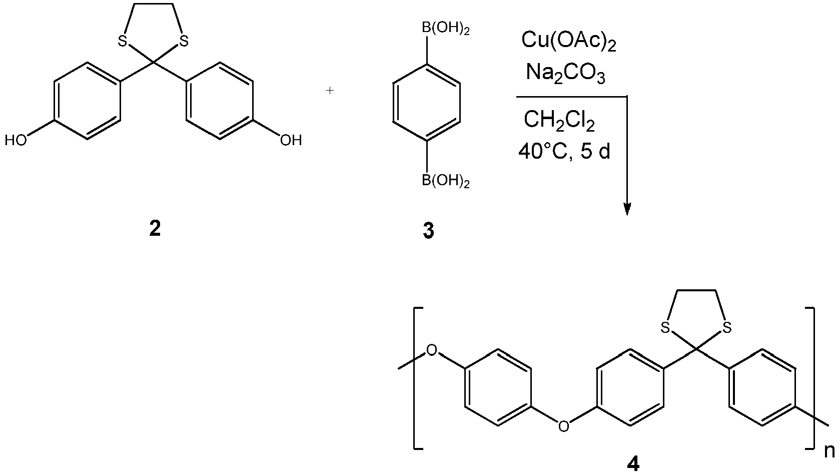

In einem Kolben mit Rückflusskühler wurden unter inerten Bedingungen 200 mg (0,69 mmol) 4,4'-(1,3-Dithiolan-2,2-diyl)diphenol (**2**) aus Beispiel 1 in 4 ml Dichlormethan vorgelegt. Es wurden 110 mg (0,8 mmol) Natriumcarbonat zugegeben und das Gemisch wurde auf 40 °C erhitzt. Dazu wurden 251 mg (6,9 mmol) Kupfer(II)-acetat zugegeben. Innerhalb von 5 Tagen wurden nun 1,4-Phenylendiborsäure (115 mg; 0,69 mmol) in kleinen Portionen zugegeben. Das Reaktionsgemisch wurde auf Raumtemperatur abgekühlt, filtriert und der Niederschlag wurde mit 5 ml Dichlormethan nachgewaschen. Das Lösungsmittel wurde unter reduziertem Druck entfernt.
Poly(ether-dithioacetal) (**4**)
¹H-NMR (200 MHz, CDCl₃) δ = 3.43 (s, 4H, C*H*₂), 6.90 (m, 4H, *H*-Ar), 7.58 (m, 4H, *H*-Ar) ppm
¹³C-NMR (90 MHz, CDCl₃) δ = 40.8, 77.5, 117.7, 121.2, 130.5, 139.4, 152.9, 157.4 ppm

Das Produkt wurde anschließend im Rückfluss mittels 2-lodo-2-methylpropan in Chloroform und DMSO entschützt, um ein PEEK ohne Schutzgruppe zu erhalten.

## Patentansprüche

1. Verfahren zur Herstellung eines Polyetheretherketons, **gekennzeichnet durch** die folgenden Schritte:
a) Umsetzen eines mindestens zweifach substituierten Benzophenons der allgemeinen Formel (I) mit einem Benzolderivat der allgemeinen Formel (II) bei einer Temperatur von 100 °C oder weniger, 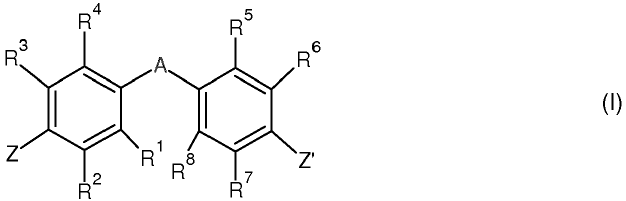 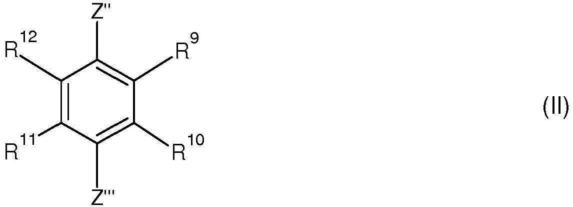 wobei
A ein mit einer Schutzgruppe versehenes Kohlenstoffatom bedeutet,
R¹, R², R³, R⁴, R⁵, R⁶, R⁷, R⁸, R⁹, R¹⁰, R¹¹, R¹² jeweils unabhängig voneinander H, D, OH, X, substituiertes oder nicht substituiertes C₁-C₅-Alkyl oder substituiertes oder nicht substituiertes C₆-C₁₀-Aryl bedeutet,
X F, Cl, Br oder I bedeutet,
Z, Z', Z", Z"' jeweils unabhängig voneinander OH, OMe, Me(OH)ₘ MeR¹³ₘ oder Me bedeutet,
m 1, 2, 3 oder 4 bedeutet,
R¹³ Metall, Alkalimetall oder Erdalkalimetall und
Me Metall, Alkalimetall oder Erdalkalimetall bedeutet.
b) Entschützen des in Schritt a) gebildeten Produktes, um ein Polyetheretherketon der allgemeinen Formel (III) zu erhalten: 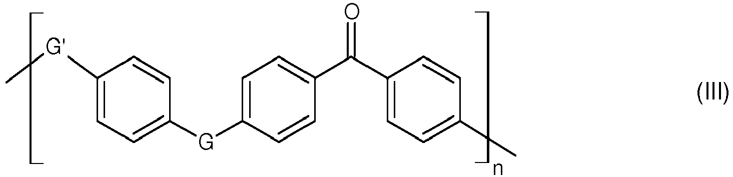 wobei
G, G' jeweils unabhängig voneinander O oder C bedeutet und
n eine ganze Zahl, die größer als 10 ist, bedeutet.

2. Verfahren gemäß Anspruch 1, **dadurch gekennzeichnet, dass** es einen dem Schritt a) vorgelagerten Schritt umfasst, in welchem die Schutzgruppe durch Umsetzen eines 4,4'-substituierten Benzophenons mit einem Diol oder einem Dithiol, insbesondere durch Umsetzen mit 1,2-Ethandiol oder 1,2-Ethandithiol, in das 4,4'-substituierte Benzophenon der allgemeinen Formel (I) eingeführt wird.

3. Verfahren gemäß Anspruch 1 oder 2, **dadurch gekennzeichnet, dass** die Schutzgruppe eine Verbindung der allgemeinen Formel (IV) oder ein alkylsubstituiertes Derivat hiervon ist, 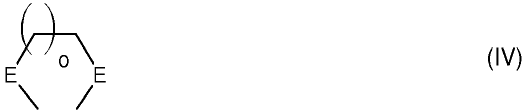 wobei
E O oder S bedeutet und
o 1, 2, 3, 4, 5, 6, 7, 8, 9 oder 10 bedeutet.
und wobei das zu schützende Kohlenstoffatom mittels der beiden in der Formel (IV) dargestellten Bindungen an die Atome des Typs E gebunden ist.

4. Verfahren gemäß einem der vorherigen Ansprüche, **dadurch gekennzeichnet, dass** Me Li, Na, K, Ca, Bi, Sn oder B bedeutet.

5. Verfahren gemäß einem der vorherigen Ansprüche, **dadurch gekennzeichnet, dass** als mindestens zweifach substituiertes Benzophenon eine Verbindung mit folgender Strukturformel (VI) eingesetzt wird:

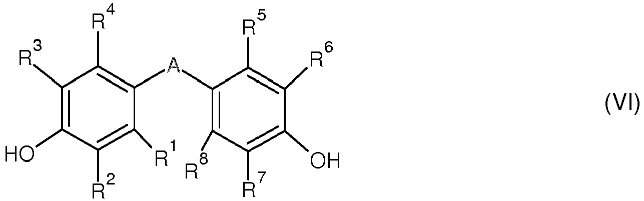

6. Verfahren gemäß einem der vorherigen Ansprüche, **dadurch gekennzeichnet, dass** als Benzolderivat eine Phenylborsäure mit folgender Strukturformel (VII) eingesetzt wird:

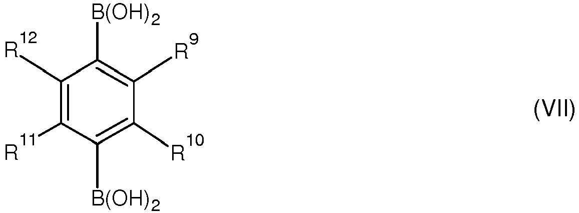

7. Verfahren gemäß einem der vorherigen Ansprüche, **dadurch gekennzeichnet, dass** das Umsetzen in Anwesenheit eines Katalysators erfolgt.

8. Verfahren gemäß Anspruch 7, **dadurch gekennzeichnet, dass** der Katalysator ausgewählt ist aus Verbindungen, die Nickel, Kupfer, Zink, Palladium, Silber, Cadmium, Platin und/oder Gold enthalten, und aus den vorgenannten Metallen selbst.

9. Verfahren gemäß Anspruch 7 oder 8, **dadurch gekennzeichnet, dass** der Katalysator Kupferoxid, Kupfer(II)-triflat, Kupfernitrat, Kupfer(II)-acetat und/oder Kupfer(II)-acetylacetonat aufweist.

10. Verfahren gemäß einem der Ansprüche 7 bis 9, **dadurch gekennzeichnet, dass** der Katalysator ausgewählt aus Alkalimetallsalzen und/oder Erdalkalimetallsalzen.

11. Verfahren gemäß einem der vorherigen Ansprüche, **dadurch gekennzeichnet, dass** das in Schritt a) gebildete Produkt zunächst gereinigt wird, bevor eine Entschützung gemäß Schritt b) erfolgt.

## Claims

1. A method for producing a polyether ether ketone, **characterized by** the following steps:
a) reacting an at least disubstituted benzophenone of the general formula (I) with a benzene derivative of the general formula (II) at a temperature of 100 °C or less, 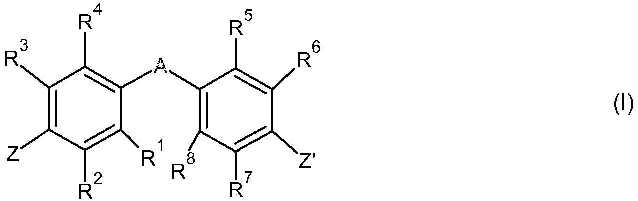 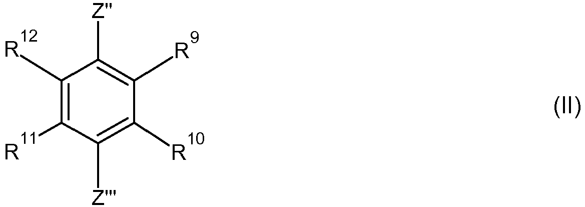 wherein
A represents a carbon atom provided with a protective group,
R¹, R², R³, R⁴, R⁵, R⁶, R⁷, R⁸, R⁹, R¹⁰, R¹¹, R¹² each independently represents H, D, OH, X, substituted or unsubstituted C₁-C₅ alkyl or substituted or unsubstituted C₆-C₁₀ aryl,
X represents F, Cl, Br or I,
Z, Z', Z", Z"' each independently represents OH, OMe, Me(OH)ₘ, MeR¹³ₘ or Me,
m is 1, 2, 3 or 4,
R¹³ represents metal, alkali metal or alkaline earth metal, and
Me represents metal, alkali metal or alkaline earth metal,
b) deprotecting the product formed in step a) in order to obtain a polyether ether ketone of the general formula (III): 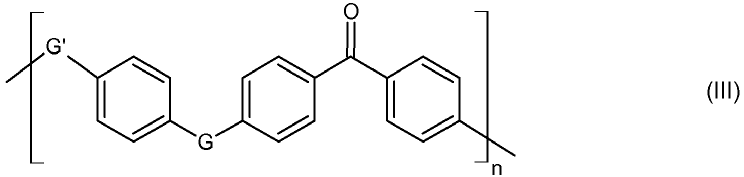 wherein
G, G' each independently represents O or C, and
n is an integer which is greater than 10.

2. The method according to claim 1, **characterized in that** it comprises a step preceding step a), in which the protective group is introduced into the 4,4'-substituted benzophenone of the general formula (I) by reacting a 4,4'-substituted benzophenone with a diol or a dithiol, in particular by reacting with 1,2-ethanediol or 1,2-ethanedithiol.

3. The method according to claim 1 or 2, **characterized in that** the protective group is a compound of the general formula (IV) or an alkyl-substituted derivative thereof, 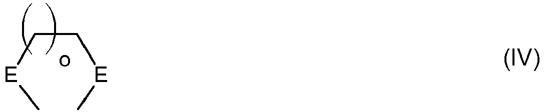 wherein
E represents O or S, and
o is 1, 2, 3, 4, 5, 6, 7, 8, 9 or 10,
and wherein the carbon atom to be protected is bound to the atoms of type E by means of the two bonds shown in formula (IV).

4. The method according to any of the preceding claims, **characterized in that** Me represents Li, Na, K, Ca, Bi, Sn or B.

5. The method according to any of the preceding claims, **characterized in that** as an at least disubstituted benzophenone a compound with the following structural formula (VI) is used:

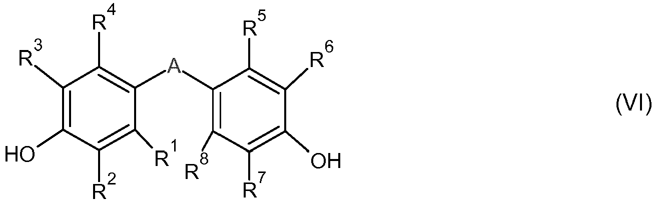

6. The method according to any of the preceding claims, **characterized in that** as benzene derivative a phenylboric acid with the following structural formula (VII) is used:

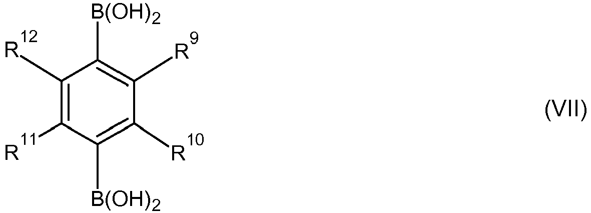

7. The method according to any of the preceding claims, **characterized in that** the reaction is effected in the presence of a catalyst.

8. The method according to claim 7, **characterized in that** the catalyst is selected from compounds which contain nickel, copper, zinc, palladium, silver, cadmium, platinum and/or gold, and from the aforementioned metals themselves.

9. The method according to claim 7 or 8, **characterized in that** the catalyst includes copper oxide, copper(II) triflate, copper nitrate, copper(II) acetate and/or copper(II) acetylacetonate.

10. The method according to any of claims 7 to 9, **characterized in that** the catalyst is selected from alkali metal salts and/or alkaline earth metal salts.

11. The method according to any of the preceding claims, **characterized in that** the product formed in step a) initially is purified, before a deprotection according to step b) is effected.

## Revendications

1. Procédé de fabrication d'une polyéther-éther-cétone, **caractérisé par** les étapes suivantes :
a) la mise en réaction d'une benzophénone substituée au moins deux fois de formule générale (I) avec un dérivé de benzène de formule générale (II) à une température de 100 °C ou moins, 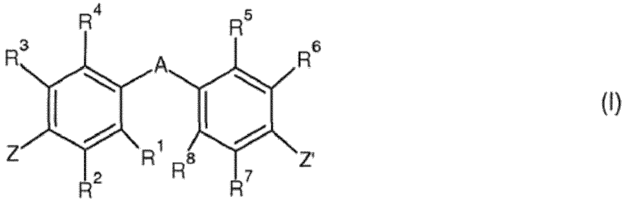 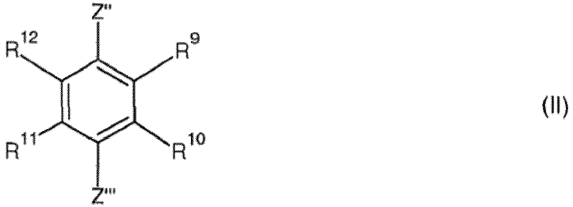 dans lesquelles
A signifie un atome de carbone muni d'un groupe protecteur,
R¹, R², R³, R⁴, R⁵, R⁶, R⁷, R⁸, R⁹, R¹⁰, R¹¹, R¹²
signifient chacun indépendamment les uns des autres
H, D, OH, X, un alkyle en C₁-C₅ substitué ou non substitué, ou un aryle en C₆-C₁₀ substitué ou non substitué,
X signifie F, Cl, Br ou I,
Z, Z', Z", Z"'
signifient chacun indépendamment les uns des autres OH, OMe, Me(OH)ₘ, MeR¹³ₘ ou Me,
m signifie 1, 2, 3 ou 4,
R¹³ signifie un métal, un métal alcalin ou un métal alcalino-terreux, et
Me signifie un métal, un métal alcalin ou un métal alcalino-terreux,
b) la déprotection du produit formé à l'étape a) afin d'obtenir une polyéther-éther-cétone de formule générale (III) : 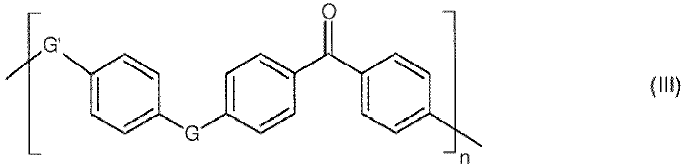 dans laquelle
G, G' signifient chacun indépendamment l'un de l'autre O ou C, et
n signifie un nombre entier supérieur à 10.

2. Procédé selon la revendication 1, **caractérisé en ce qu'**il comprend une étape en amont de l'étape a), lors de laquelle le groupe protecteur est inséré dans la benzophénone 4,4'-substituée de formule générale (I) par mise en réaction d'une benzophénone 4,4'-substituée avec un diol ou un dithiol, notamment par mise en réaction avec du 1,2-éthanediol ou du 1,2-éthanedithiol.

3. Procédé selon la revendication 1 ou 2, **caractérisé en ce que** le groupe protecteur est un composé de formule générale (IV) ou un dérivé à substitution alkyle de celui-ci : 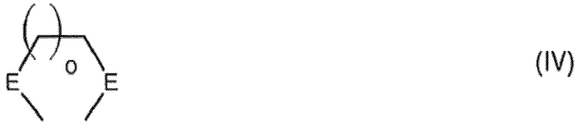 dans laquelle
E signifie O ou S, et
o signifie 1, 2, 3, 4, 5, 6, 7, 8, 9 ou 10,
et dans laquelle l'atome de carbone à protéger est relié par les deux liaisons représentées dans la formule (IV) aux atomes de type E.

4. Procédé selon l'une quelconque des revendications précédentes, **caractérisé en ce que** Me signifie Li, Na, K, Ca, Bi, Sn ou B.

5. Procédé selon l'une quelconque des revendications précédentes, **caractérisé en ce qu'**un composé ayant la formule structurale (VI) suivante est utilisé en tant que benzophénone substituée au moins deux fois :

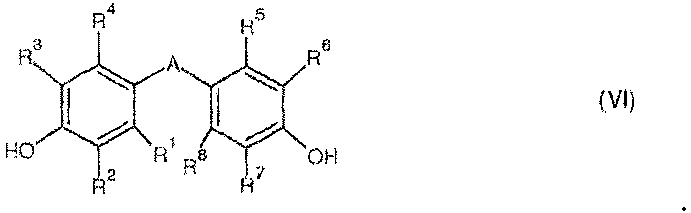

6. Procédé selon l'une quelconque des revendications précédentes, **caractérisé en ce qu'**un acide phénylborique ayant la formule structurale (VII) suivante est utilisé en tant que dérivé de benzène :

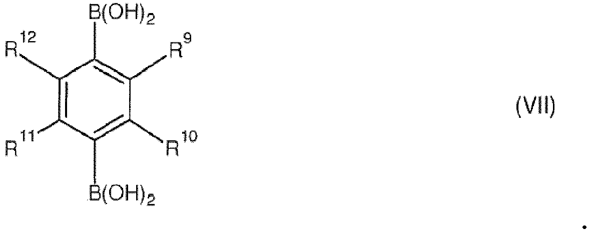

7. Procédé selon l'une quelconque des revendications précédentes, **caractérisé en ce que** la réaction a lieu en présence d'un catalyseur.

8. Procédé selon la revendication 7, **caractérisé en ce que** le catalyseur est choisi parmi les composés qui contiennent du nickel, du cuivre, du zinc, du palladium, de l'argent, du cadmium, du platine et/ou de l'or, et parmi les métaux susmentionnés eux-mêmes.

9. Procédé selon la revendication 7 ou 8, **caractérisé en ce que** le catalyseur comprend de l'oxyde de cuivre, du triflate de cuivre (II), du nitrate de cuivre, de l'acétate de cuivre (II) et/ou de l'acétylacétonate de cuivre (II).

10. Procédé selon l'une quelconque des revendications 7 à 9, **caractérisé en ce que** le catalyseur est choisi parmi les sels de métaux alcalins et/ou les sels de métaux alcalino-terreux.

11. Procédé selon l'une quelconque des revendications précédentes, **caractérisé en ce que** le produit formé à l'étape a) est tout d'abord purifié, avant qu'une déprotection selon l'étape b) ait lieu.
